# EUROPÄISCHE PATENTSCHRIFT

(11) **EP 0 700 939 B1**
(45) Veröffentlichungstag und Bekanntmachung des Hinweises auf die Patenterteilung: **03.12.1997**
(21) Anmeldenummer: 95112676.2
(22) Anmeldetag: 11.08.1995
(51) Int. Cl.: C08F 255/02, C08L 23/10, C08J 9/18

(54) **Expandierte Polypropylen-Partikel**
Expanded polypropylene particle
Particule de polypropylène expansée

(30) Priorität: 20.08.1994 DE 4429598
(43) Veröffentlichungstag der Anmeldung: 13.03.1996
(73) Patentinhaber: BASF AKTIENGESELLSCHAFT, 67056 Ludwigshafen (DE)
(72) Erfinder: Marczinke, Bernd Lothar, Dr., D-67346 Speyer (DE); Fischer, Joachim, Dr., D-67229 Grosskarlbach (DE); De Grave, Isidoor, Dr., D-67157 Wachenheim (DE); Kögel, Wolfram, D-68309 Mannheim (DE); Tatzel, Hermann, D-69469 Weinheim (DE); Hingmann, Roland, Dr., D-68526 Ladenburg (DE)

(56) Entgegenhaltungen:
- EP-A- 0 405 935
- EP-A- 0 503 361
- EP-A- 0 507 075
- EP-A- 0 520 773

## Beschreibung

Die Erfindung betrifft expandierte Polypropylen-Partikel mit einer Dichte von 10 bis 150 g/l und einem Partikeldurchmesser von 2 bis 10 mm auf Basis eines teilvernetzten Propylenpolymerisats mit einem Propylengehalt von mehr als 50 Gew.-%.

Expandierte Polypropylen(EPP)-Partikel werden in großtechnischem Maßstab zur Herstellung von Schaumstoff-Formteilen eingesetzt. Sie werden gewöhnlich durch Imprägnieren von Polypropylen-Granulat mit organischen Treibmitteln in wäßriger Suspension unter Druck und anschließendem Entspannen hergestellt. Man kann sie aber auch durch Vermischen des Polypropylens mit einem organischen Treibmittel in einem Extruder, Auspressen aus einer Düse und Granulieren des erhaltenen Schaumstrangs herstellen. Ein solches Verfahren ist in EP-A-588 321 beschrieben. Dabei werden Propylenpolymerisate mit hoher Schmelzefestigkeit eingesetzt, bei denen wenigstens ein Teil der Polymerketten verzweigt sein soll. Diese Verzweigung kann entweder durch Behandlung des linearen Propylenpolymerisats mit energiereichen Strahlen, z.B. Elektronenstrahlen, oder durch Behandlung mit organischen Peroxiden bewirkt werden. Die Elektronenstrahlbehandlung ist ein teures und aufwendiges Verfahren; die Peroxid-Methode ist sehr kritisch, da schon geringe Abweichungen von den optimalen Reaktionsbedingungen zu Abbaureaktionen bzw. zu starker Vernetzung und damit Gelbildung führen können.

Der Erfindung lag die Aufgabe zugrunde, EPP-Partikel auf Basis eines gelfreien und teilvernetzten Propylenpolymerisats bereitzustellen, bei dem die Polymerketten auf einfache und unkritische Weise miteinander verknüpft wurden.

Diese Aufgabe wird gelöst durch EPP-Partikel, bei denen die Polymerketten durch polyfunktionelle organische Verbindungen miteinander verknüpft sind.

Es hat sich überraschenderweise gezeigt, daß Schaumstoff-Formkörper, die aus den erfindungsgemäßen EPP-Partikeln hergestellt wurden, viel besser bedruckbar und lackierbar sind als Schaumstoff-Formkörper aus EPP-Partikeln, die nach EP-A-588 321 hergestellt werden. Außerdem können die EPP-Partikel mit üblichen Farbstoffen gut eingefärbt werden. Gegenüber EPP-Partikeln aus nicht vernetzten Propylenpolymerisaten haben die erfindungsgemäßen EPP-Partikel den Vorteil, daß daraus hergestellte Schaumstoff-Formteile verzugsfrei und formstabil sind.

Propylenpolymerisate im Sinne der vorliegenden Erfindung sind
a. Homopolypropylen,
b. Randomcopolymere des Propylens mit 0,1 bis 15, vorzugsweise 0,5 bis 12 Gew.-% Ethylen und/oder einem C₄-C₁₀-α-Olefin, vorzugsweise ein Copolymer von Propylen mit 0,5 bis 6 Gew.-% Ethylen oder Buten-1 oder ein Terpolymer aus Propylen, 0,5 bis 6 Gew.-% Ethylen und 0,5 bis 6 Gew.-% Buten-1, oder
c) Mischungen aus a. oder b. mit 3 bis 75, vorzugsweise 5 bis 50 Gew.-% eines Polyolefin-Elastomeren, z.B. eines Ethylen/ Propylen-Blockcopolymeren mit 35 - 65 Gew.-% Propylen.

Die Propylenpolymerisate werden nach üblichen Verfahren mit Ziegler-Natta-Katalysatoren hergestellt und fallen dabei im allgemeinen als lineare Polymere an. Diese linearen Propylenpolymerisate werden durch Umsetzung mit polyfunktionellen organischen Verbindungen teilvernetzt, gegebenenfalls in Gegenwart von Peroxiden oder anderen Radikalbildnern.

In einer bevorzugten Ausführungsform wird die Teilvernetzung durchgeführt durch Umsetzung von linearem Propylenpolymerisat mit 0,001 bis 5 Gew.-% eines Bismaleinimids, eines Vinyl- oder (Meth-)Acryl-Gruppen tragenden Silans oder eines polyfunktionellen Acrylats, gegebenenfalls in Gegenwart von 0 bis 2 Gew.-% eines organischen Peroxids.

Bevorzugte polyfunktionelle organische Verbindungen sind Bismaleinimide der Formel 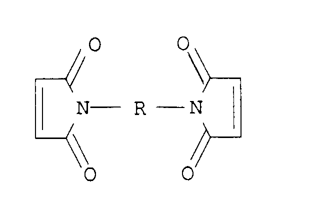 (mit R = Alkylen-, Cycloalkylen- oder Arylenrest, der gegebenenfalls substituiert und/oder durch Sauerstoff- oder Sulfonbrücke unterbrochen sein kann).

Sie werden dem linearen Propylenpolymerisat in Mengen von 0,001 bis 5, vorzugsweise von 0,01 bis 2 Gew.-% zugesetzt, gegebenenfalls zusammen mit 0 bis 2 Gew.-% eines organischen Peroxids. Die Umsetzung erfolgt bei Temperaturen von 180 bis 280°C, Drücken von 1 bis 100 bar und mittleren Verweilzeiten von 0,2 bis 5 min, vorzugsweise in einem Extruder. Derart hergestellte teilvernetzte Propylenpolymerisate sowie das Herstellverfahren mit Ausgangsmaterialien und Verfahrensbedingungen sind in der EP-A-574 796 ausführlich beschrieben. Ebenfalls geeignet zur Teilvernetzung von linearen Propylenpolymerisaten sind polyfunktionelle (Meth-)Acrylate, beispielsweise Ester der Acryl- oder Methacrylsäure mit Hexandiol, Tripropylenglykol, Dipropylenglykol oder Glycerin. Derartige Umsetzungen sind in der deutschen Patentanmeldung P 44 21 929 beschrieben. Ferner sind Organosilanverbindungen, die Vinyl- oder (Meth-)Acrylreste tragen, geeignet. Die entsprechenden Umsetzungsreaktionen und die Umsetzungsprodukte sind in EP-A-560 131 beschrieben.

Die durch die genannte Umsetzungsreaktionen erhaltenen Propylenpolymerisate sind zwar durch Kettenverknüpfung teilvernetzt, die Vernetzung darf aber nicht so weit gehen, daß eine nennenswerte Gelbildung erfolgt, d.h. der Gelgehalt sollte unter 0,5 Gew.-% liegen. Die Bestimmung des Gelgehaltes erfolgt durch Extraktion mit siedendem Xylol.

Die Propylenpolymerisate weisen im allgemeinen einen Schmelzindex von 0,1 bis 100, vorzugsweise von 0,1 bis 50 g/10 min (bei 230°C und einem Gewicht von 2,16 kg) auf. Sie zeigen ein besonderes Fließverhalten in Form einer Dehnverfestigung.

Die Herstellung der erfindungsgemäßen EPP-Partikel erfolgt nach den an sich bekannten Imprägnier- bzw. Schaumextrusionsverfahren. Beim Imprägnierverfahren wird granuliertes Polypropylen zusammen mit 2 bis 40, vorzugsweise 5 bis 30 Gew.-% eines flüchtigen Treibmittels in Wasser suspendiert. Als Treibmittel kommen Kohlenwasserstoffe, wie z.B. Butan, Pentan, Cyclopentan, Cyclohexan, ferner Gase wie Kohlendioxid, Edelgas, Luft oder Stickstoff in Frage, sowie Gemische dieser Treibmittel. Die Imprägnierung wird vorzugsweise in einem Rührreaktor bei Temperaturen von 100 bis 160°C unter einem Druck von 10 bis 100 bar bei Verweilzeiten zwischen 30 und 180 min durchgeführt. Anschließend wird entspannt, wobei die Schaumpartikel entstehen.

Beim Extrusionsverfahren wird in einem Extruder das Propylenpolymerisat, zusammen mit 2 bis 30 Gew.-% eines flüchtigen organischen Treibmittels bei 120 bis 240°C aufgeschmolzen, wobei dieses gelöst wird. Nach einer Verweilzeit von 0,5 bis 90 min wird das treibmittelhaltige Polymere unter Aufschäumen durch eine Düse ausgepreßt und granuliert.

Bei einer speziellen Ausführungsform dieses Extrusionsverfahrens kann die Teilvernetzung und Verschäumung von einem linearen Propylenpolymerisat in einem Arbeitsgang vorgenommen werden. Dabei werden sowohl die polyfunktionelle organische Verbindung als auch das Treibmittel, vorzugsweise nacheinander durch verschiedene Einfüllöffnungen, dem Extruder zugeführt.

Grundsätzlich können vor dem Verschäumen dem teilvernetzten Propylenpolymerisat bis zu 100 % seines Gewichts an linearem Propylenpolymerisat zugesetzt werden. Man kann auch verschiedenartig teilvernetzte Propylenpolymerisate vermischen. Auch können dem Propylenpolymerisat übliche Zusatzstoffe, wie Farbstoffe, Pigmente, Keimbildner, Stabilisatoren, Flammschutzmittel, Gleitmittel und Antistatika zugesetzt werden.

Die erfindungsgemäßen EPP-Partikel weisen eine Dichte von 10 bis 150, vorzugsweise von 20 bis 120 g/l auf und einen Partikeldurchmesser von 2 bis 10 mm. Sie sind überwiegend geschlossenzellig mit einer Zellzahl von vorzugsweise 5 bis 500 Zellen pro mm².

Die EPP können nach üblichen Verfahren mit Wasserdampf oder Heißluft zu Schaumstoff-Formteilen verschweißt werden, welche in der Automobil- und Verpackungsindustrie Anwendung finden.

Die in den Beispielen genannten Teile und Prozente beziehen sich auf das Gewicht.

### Beispiel

Ein nach EP-A-574 796 mit 0,2 Gew.-% 1,3-m-Phenylenbismaleinimid modifiziertes Ethylen-Propylen-Randomcopolymer mit einem Ethylengehalt von ca. 3 Gew.-%, einem Schmelzpunkt von 147°C, einem MFI (230°C; 2,16 kg) von 10 g/10 min, einem in xylol löslichen Anteil von 5,5 Gew.-% und einer transienten Dehnviskosität, die bei einer Gesamtdehnung von ε > 1 den dreifachen Wert der linear viskoelastischen Anlaufkurve η (t) um den Faktor 1,8 übersteigt, wird einer Tandemanlage, die aus einer ZDSK 53 (Zweischneckenextruder mit diversen Zahnradscheiben auf eine Länge von 21 D) und einer KE 90 (Einschneckenkühlextruder mit einer Länge von 32 D) in einer Menge von 20 kg/h zugeführt. Nach einer Länge von 13 D werden in die mittlerweile auf ca. 220°C aufgewärmte Polymermasse, der zur Erzeugung einer homogenen Zellstruktur 0,3 Gew.-% Talkum zugesetzt wurden, 5 Gew.-% flüssiges Kohlendioxid eingedüst. An der Übergangsstelle in den Einschneckenextruder steht die Polymerschmelze, deren Temperatur nach Zugabe des gekühlten Kohlendioxides wieder 220°C erreicht hat, unter einem Druck von ca. 230 bar. Dieser Druck wird im Verweilzeitextruder durch Reduktion der Schmelzetemperatur auf 158°C und die spezielle Gestaltung der 2 mm-Austrittsdüse auf 50 bar abgesenkt.

Die aufgeschäumte Schmelze wird mit einem Granulator der Firma Berstoff an der Düse der Tandemanlage heiß abgeschlagen und die Schaumpartikel, deren Schüttdichte 22,5 g/l betrug, mit Inertgas abgekühlt. Nach einer kurzen Lagerzeit (ca. 12 h) wurden die Schaumpartikel auf einem Formteilautomaten der Firma Erlenbach zu quaderförmigen Formteilen mit Dichten zwischen 32 und 60 g/l verarbeitet. Nach einer 12-stündigen Temperatur bei 80°C wurden die Rechteckformteile auf Raumtemperatur abgekühlt. Ein Teil der Formteile wurde bedruckt, der Rest lackiert. Infolge der Polarmodifikation wurde ein klares Schriftbild und eine ausgezeichnete Haftung des Lacks erhalten. Eine aufwendige Plasmabehandlung der Formteile war nicht mehr notwendig.

## Patentansprüche

1. Expandierte Polypropylen(EPP)-Partikel mit einer Dichte von 10 bis 150 g/1 und einem Partikeldurchmesser von 2 bis 10 mm, dadurch gekennzeichnet, daß das zugrundeliegende Propylenpolymerisat mit einem Propylengehalt von mehr als 50 Gew.-% teilvernetzt ist, und einen Gelgehalt von weniger als 0,5 Gew.-%, bestimmt durch Extraktion in siedendem Xylol, aufweist, wobei die Polymerketten durch polyfunktionelle organische Verbindungen miteinander verknüpft sind.

2. EPP-Partikel nach Anspruch 1, dadurch gekennzeichnet, daß das Propylenpolymerisat ausgewählt ist aus
a. Homopolypropylen,
b. ein Randomcopolymer von Propylen mit 0,1 bis 15 Gew.-% Ethylen und/oder einem C₄-C₁₀-α-Olefin,
c. einer Mischung von a. oder b. mit 3 bis 75 Gew.-% eines Polyolefin-Elastomeren.

3. EPP-Partikel nach Anspruch 1, dadurch gekennzeichnet, daß die Teilvernetzung durchgeführt wurde durch Umsetzung von linearem Propylenpolymerisat mit 0,001 bis 5 Gew.-% eines Bismaleinimids, eines Vinyl- oder (Meth-)Acryl-Gruppen tragenden Silans oder eines polyfunktionellen Acrylats, gegebenenfalls in Gegenwart von 0 bis 2 Gew.-% eines organischen Peroxids.

4. EPP-Partikel nach Anspruch 3, dadurch gekennzeichnet, daß das Propylenpolymerisat umgesetzt wurde mit 0,01 bis 2,0 Gew.-% eines Bismaleinimids der Formel 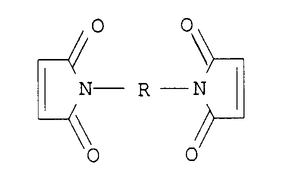 (mit R = Alkylen-, Cycloalkylen- oder Arylenrest, der gegebenenfalls substituiert und/oder durch Sauerstoff- oder Sulfonbrücke unterbrochen sein kann), bei Temperaturen von 180 bis 280°C, Drücken von 1 bis 100 bar und mittleren Verweilzeiten von 0,2 bis 5 min.

5. Verfahren zur Herstellung der EPP-Partikel nach Anspruch 1 durch Imprägnieren von Propylenpolymerisat-Granulat mit 2 bis 40 Gew.-% eines flüchtigen Treibmittels in wäßriger Suspension unter Druck bei Temperaturen von 100 bis 160°C und anschließendem Entspannen.

6. Verfahren zur Herstellung der EPP-Partikel nach Anspruch 1 durch Extrudieren des Propylenpolymerisats zusammen mit 2 bis 30 Gew.-% eines flüchtigen organischen Treibmittels bei Temperaturen von 120 bis 240°C und Granulieren des erhaltenen Schaumstrangs.

7. Verfahren zur Herstellung der EPP-Partikel nach Anspruch 6, dadurch gekennzeichnet, daß in einem Extruder einem linearen Propylenpolymerisat sowohl die polyfunktionelle organische Verbindung als auch das flüchtige organische Treibmittel zugesetzt werden.

## Claims

1. Expanded polypropylene (EPP) beads having a density of from 10 to 150 g/l and a diameter of from 2 to 10 mm, wherein the propylene polymer starting material having a propylene content of greater than 50% by weight is partially crosslinked and has a gel content of less than 0.5% by weight, determined by extraction in boiling xylene, the polymer chains being linked to one another by polyfunctional organic compounds.

2. EPP beads as claimed in claim 1, wherein the propylene polymer is selected from the group consisting of
a. homopolypropylene,
b. a random copolymer of propylene with from 0.1 to 15% by weight of ethylene and/or a C₄-C₁₀-α-olefin,
c. a mixture of a. or b. with from 3 to 75% by weight of a polyolefin elastomer.

3. EPP beads as claimed in claim 1, wherein the partial crosslinking has been carried out by reacting a linear propylene polymer with from 0.001 to 5% by weight of a bismaleimide, a vinyl- or (meth)acrylyl-carrying silane or a polyfunctional acrylate, if desired in the presence of from 0 to 2% by weight of an organic peroxide.

4. EPP beads as claimed in claim 3, wherein the propylene polymer has been reacted with from 0.01 to 2.0% by weight of a bismaleimide of the formula 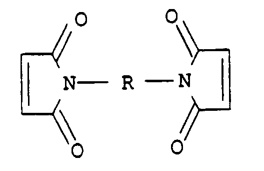 (where R is an alkylene, cycloalkylene or arylene radical which is unsubstituted or substituted and/or may be interrupted by an oxygen or sulfone bridge), at from 180 to 280°C and at from 1 to 100 bar and at a mean residence time of from 0.2 to 5 minutes.

5. A process for the production of EPP beads as claimed in claim 1 by impregnating propylene polymer granules with from 2 to 40% by weight of a volatile blowing agent in aqueous suspension under pressure at from 100 to 160°C, and subsequently decompressing the mixture.

6. A process for the production of EPP beads as claimed in claim 1 by extruding the propylene polymer together with from 2 to 30% by weight of a volatile organic blowing agent at from 120 to 240°C, and granulating the resultant foam extrudate.

7. A process for the production of EPP beads as claimed in claim 6, wherein both the polyfunctional organic compound and the volatile organic blowing agent are added to a linear propylene polymer in an extruder.

## Revendications

1. Particules de polypropylène expansé (EPP) possédant une densité de 10 à 150 g/l et un diamètre de particules de 2 à 10 mm, caractérisées en ce que le polymère de propylène de base est soumis à une réticulation partielle avec une teneur en propylène supérieure à 50% en poids et présente une teneur en gel inférieure à 0,5% en poids, déterminée par extraction dans du xylène en ébullition, les chaînes polymères étant reliées l'une à l'autre via des composés organiques polyfonctionnels.

2. Particules EPP selon la revendication 1, caractérisées en ce que le polymère de propylène est choisi parmi
a. un homopolypropylène,
b. un copolymère statistique de propylène avec, à concurrence de 0,1 à 15% en poids d'éthylène et/ou une α-oléfine en C₄-C₁₀,
c. un mélange de a. ou de b. avec un élastomère de polyoléfine à concurrence de 3 à 75% en poids.

3. Particules EPP selon la revendication 1, caractérisées en ce qu'on effectue la réticulation partielle par mise en réaction de polymère de propylène linéaire avec, à concurrence de 0,001 à 5% en poids, un bismaléimide, un silane portant des groupes vinyliques et/ou (méth)acryliques ou un acrylate polyfonctionnel, éventuellement en présence d'un peroxyde organique, à concurrence de 0 à 2% en poids.

4. Particules EPP selon la revendication 3, caractérisées en ce qu'on fait réagir le polymère de propylène avec, à concurrence de 0,01 à 2,0% en poids, un bismaléimide, répondant à la formule 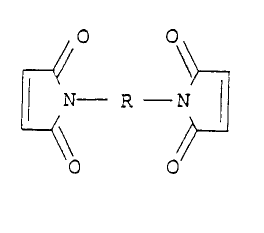 (dans laquelle R = un radical alkylène, un radical cycloalkylène ou un radical arylène, qui peut être éventuellement substitué et/ou interrompu par des ponts oxygène ou sulfone), à des températures de 180 à 280°C, sous des pressions de 1 à 100 bar et à des temps de séjour moyens de 0,2 à 5 minutes.

5. Procédé pour la préparation des particules EPP selon la revendication 1, par imprégnation d'un produit de granulation de polymère de propylène avec, à concurrence de 2 à 40% en poids, un agent moussant volatil, en suspension aqueuse, sous pression, à des températures de 100 à 160°C, et par détente ultérieure.

6. Procédé pour la préparation des particules EPP selon la revendication 1, par extrusion du polymère de propylène conjointement avec un agent moussant organique volatil à concurrence de 2 à 30% en poids à des températures de 120 à 240°C et par granulation de l'extrudat de mousse obtenu.

7. Procédé pour la préparation des particules EPP selon la revendication 6, caractérisé en ce qu'on ajoute dans une extrudeuse, à un polymère de propylène linéaire, aussi bien le composé organique polyfonctionnel que l'agent moussant organique volatil.
